# EUROPEAN PATENT APPLICATION

(11) **EP 2 219 118 A1**
(43) Date of publication of application: **18.08.2010**
(21) Application number: 08863027.2
(22) Date of filing: 03.12.2008
(51) Int. Cl.: G06F 17/30

(54) **METHOD FOR CLASSIFYING USERS, METHOD AND DEVICE FOR BEHAVIOR COLLECTION AND ANALYSE**

(30) Priority: 03.12.2007 CN 200710187582; 27.12.2007 CN 200710032901
(71) Applicant: Huawei Technologies Co., Ltd., Longgang District, Shenzhen Guangdong 518129 (CN)
(72) Inventor: YU, Bin, Guangdong 518129 (CN); ZHANG, Fei, Guangdong 518129 (CN)
(74) Representative: Riepe, Hans-Gerd
(86) International application number: PCT/CN2008/073308
(87) International publication number: WO 2009/076852

(57) **Abstract**

A method for classifying users is provided, which includes obtaining user attribute information of a user, matching the user attribute information with pre-determined user groups and/or pre-determined characters, and classifying the user into a user group and/or character that is matched successfully. A device for classifying users, a method for collecting and analyzing behaviors, and a system for collecting and analyzing behaviors are also provided.

## Description

### CROSS-REFERENCE TO RELATED APPLICATIONS

The application claims the benefit of priority to Chinese Patent Application No. 200710187582.9, entitled "METHOD AND DEVICE FOR CLASSIFYING USERS", filed on December 3, 2007, and Chinese Patent Application No. 200710032901.9, entitled "METHOD AND SYSTEM FOR COLLECTING AND ANALYZING BEHAVIORS", filed on December 27, 2007, which are all incorporated herein by reference in their entireties.

### FIELD OF THE TECHNOLOGY

The disclosure relates to the field of information technology, and more particularly to the technology for classifying users and the technology for collecting and analyzing behaviors.

### BACKGROUND

With the widespread of the Internet technologies, more and more users obtain corresponding information in the modes such as the World Wide Web (WEB) and the Wireless Application Protocol (WAP). Typical application scenarios are described as follows:
(1) news browsing through the WEB and WAP, for example, WEB or WAP websites of Sina;
(2) consumption of telecommunication value-added services in the modes such as the WEB, the WAP, and the interactive voice response (IVR), for example, purchase of ring back tones; and
(3) interaction through the WEB, WAP, and the short message service (SMS), for example, a blog system in which thread can be posted in the modes such as the WEB, WAP, and SMS.

As shown in the above application scenarios, each day a large number of users take information consumption (such as browsing and interaction) through a portal system and every user can obtain a great amount of information. However, due to different habits and preferences, not all the information is needed by each user. If needed information can be provided for a user according to demands of the user, not only personalized information services can be realized, but also service quality can be increased.

In the prior art, a method for realizing personalized presentation is provided. The method is realized through the following steps. After a user logs on, hobbies of the user are obtained and pre-stored information is filtered according to the hobbies of the user. That is to say, all the information is matched with the hobbies of the user to obtain the information in which the user is interested. Therefore, different information can be presented for different users, so as to realize personalized presentation.

In the implementation of the disclosure, the inventors find that in the method for realizing personalized presentation, all the pre-stored information need to be matched with the hobbies of the user, so that in practical implementation, complicated judging logic needs to be compiled in the program, thus resulting in quite troublesome implementation scheme.

In addition, now that different information needs to be presented for different users, the behaviors of the user need to be collected and analyzed, so as to determine information needed by the user, thereby presenting different information for different users.

A method for collecting and analyzing behaviors in the prior art is described as follows. Action information recorded in bills and communication records in which consumption occurs of a portal system user are collected. The collected action information is analyzed according to a predefined behavior analyzing policy, and then a feature of the user is determined according to the analysis result.

In the implementation of the disclosure, the inventor finds that in the method for collecting and analyzing behaviors, only the action information recorded in the bills and communication records in which consumption occurs is analyzed and the feature of the portal system user represented in the analysis result is determined, but the information about actions not involving consumption cannot be analyzed, for example, actions of browsing information cannot be analyzed. Therefore, the method is limited in terms of analysis on action behaviors of a portal system user and users cannot be sub-classified accurately, so that the targeted services cannot be provided for the sub-classified user.

As can be seen, neither of the technical solution for realizing personalized presentation and the technical solution for collecting and analyzing behaviors in the prior art is suitable.

### SUMMARY

The disclosure is directed to a method and a device for classifying users, which are capable of classifying users dynamically and avoiding compilation of complicated judging logic in the program during specific implementation.

The disclosure provides a method for classifying users, which includes the following steps.

User attribute information of a user is obtained.

The user attribute information is matched with pre-determined user groups and/or pre-determined characters, and the user is classified into a user group and/or character that is matched successfully.

The disclosure provides a device for classifying users, which includes an obtaining unit and a matching unit.

The obtaining unit is configured to obtain user attribute information of a user.

The matching unit is configured to match the user attribute information with pre-determined user groups and/or pre-determined characters, and classify the user in a user group and/or character that is matched successfully.

An embodiment of the disclosure further provides a method and system for collecting and analyzing behaviors, so as to analyze any action information to enable more comprehensive analysis on action behaviors of a portal system user, and thus users can be sub-classified accurately and targeted services can be provided for the sub-classified user.

The disclosure provides a method for collecting and analyzing behaviors, which includes the following steps. Action information of a portal system user for content presented in a portal system is recorded. According to a preset behavior analyzing policy, the action information of the user within a preset statistics period is analyzed, so as to obtain a feature of the user.

The disclosure provides a system for collecting and analyzing behaviors, which includes a behavior collecting device and a behavior analyzing device. The behavior collecting device is configured to record action information of a portal system user for content presented in a portal system. The behavior analyzing device is configured to analyze the action information of the user within a preset statistics period according to a preset behavior analyzing policy, so as to obtain a feature of the user.

In the method and device for classifying users in the embodiments of the disclosure, the user is classified into a user group and/or character according to the user attribute information. Thus, when the user enters a portal system, content corresponding to the user group and/or character of the user is provided for the user, and it is unnecessary to match all pre-stored information with the hobbies of the user, so that complicated judging logic does not need to be complied in the program during practical implementation and the implementation scheme is relatively simple.

In the method and system for collecting and analyzing behaviors in the embodiments of the disclosure, no matter whether consumption action information is generated or not, the action information can be obtained and analyzed. Thus, the features of the users that take consumption and that do not take consumption can both be obtained, so that the analysis on action behaviors of the portal system users is more comprehensible, thereby sub-classifying users accurately and providing targeted services for the sub-classified users.

### BRIEF DESCRIPTION OF THE DRAWINGS

FIG. 1 is a flow chart of a method for classifying users according to an embodiment of the disclosure;
FIG. 2 is a flow chart of a method for classifying users according to a first embodiment of the disclosure;
FIG. 3 is a flow chart of a method for classifying users according to a second embodiment of the disclosure;
FIG. 4 is a schematic view of a device for classifying users according to an embodiment of the disclosure;
FIG. 5 is a flow chart of a method for collecting and analyzing behaviors according to an embodiment of the disclosure;
FIG. 6 is a schematic structural view of a system for collecting and analyzing behaviors according to an embodiment of the disclosure; and
FIG. 7 is a schematic structural view of a behavior analyzing device 603 in FIG 6 according to an embodiment of the disclosure.

### DETAILED DESCRIPTION OF THE EMBODIMENTS

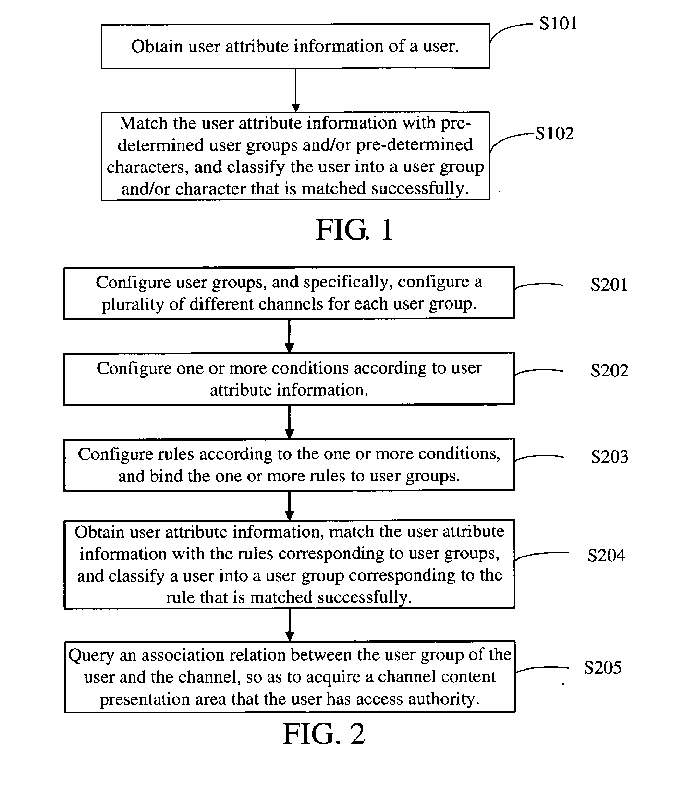

First, referring to FIG. 1, a method for classifying users according to an embodiment of the disclosure is illustrated. As shown in FIG. 1, the method includes the following steps.

In step S101, user attribute information of a user is obtained.

In step S102, the user attribute information is matched with pre-determined user groups and/or pre-determined characters, and the user is classified into a user group and/or character that is matched successfully.

The user attribute information can be matched with the pre-determined user groups and/or pre-determined characters in various realization modes. For example, the pre-determined user groups and/or pre-determined characters can correspond to at least one rule. Thus, one mode of matching the user attribute information with the pre-determined user groups and/or pre-determined characters is matching the user attribute information with a rule corresponding to the pre-determined user groups and/or a rule corresponding to the pre-determined characters. Apparently, a user group and/or character that is matched successfully is a user group and/or character corresponding to the rule that is successfully matched with the user attribute information.

Before the user attribute information is obtained, one or more configuration works can be performed. For example, conditions are configured according to the user attribute information, in which each condition includes one or more pieces of user attribute information; the rule is configured according to the conditions, in which each rule includes one or more conditions; and the one or more rules are bound to one user group and/or character. Thus, subsequently, the classification of the user into the user group and/or character is well based.

Before the user attribute information is obtained, at least one channel can be configured for each user group. After the user is classified into the user group that is matched successfully, when the user enters a portal system, content of a channel corresponding to the user group that is matched successfully can be displayed for the user.

In addition, before the user attribute information is obtained, at least one portlet can also be configured for each character. After the user is classified into a character that is matched successfully, when the user enters the portal system, a portlet corresponding to the character that is matched successfully can be displayed for the user. The portlet is a web application, which is usually configured to provide personalization, single login, and gathering of content from various information sources, and serve as a host for a presentation layer of an information system. The content generated by the portlet can also be referred to as a segment. The segment is a small piece that supports a certain rule language (for example, the Hypertext Markup language (HTML), the Extensible Markup Language (XML) or the Wireless Markup Language (WML)) and can be combined with other segments to form a complete file. The content of all portlets can be normally combined to form a portal page. Each portlet page is formed by one or more portlet windows. Each portlet window can further be divided into two parts, including appearance which determines a format of a title bar, control, and borders of the portlet window, and a portlet segment filled by portlet content.

Apparently, channel configuration for the user group and the portlet configuration for the character can be performed together, and display of the channel content for the user and display of portlet for the user can also be performed together.

In order to make persons skilled in the art to better understand the embodiments of the disclosure, the method for classifying users in the embodiments of the disclosure is illustrated in detail below.

In a first embodiment, the disclosure provides a method for classifying users, the process of which is as shown in FIG 2. The method specifically includes the following steps.

In step S201, user groups are configured. Specifically, a plurality of different channels is configured for each user group. Each channel includes a plurality of portlets.

In step S202, one or more conditions are configured according to user attribute information. Each condition can be a triplet related to the user attribute information. The triplet, for example, is a combination of three kinds of user attribute information including number segment information, age, and hobbies, an example of which is as follows:
■ "number segment information": between "XX and XX";
■ "age": between "XX and XX" or greater than "XX"; and
■ "hobby": interested in "XX" and "XX".

It should be noted that each condition can be a combination of random kinds of user attribute information.

In step S203, rules are configured according to the one or more conditions and the one or more rules are bound to user groups. Each rule can include one or more conditions, that is to say, a rule is a set of conditions. Usually, a plurality of conditions for a specific purpose is classified into a rule.

In step S204, user attribute information is obtained, the user attribute information is matched with the rules corresponding to user groups, and a user is classified into a user group corresponding to the rule that is matched successfully.

In step S205, when the user requests to access a channel, an association relation between the user group of the user and the channel is queried, so as to acquire a channel content presentation area that the user has access authority.

The channel and the user group are usually associated when the channel is maintained, so that the user can control visibility of the channel content.

The first embodiment is illustrated below through examples. It is assumed that four user groups are configured in advance, including a music group, a sports group, a military group, and a literature group. Users that belong to the same user group have the authority to access the channel corresponding to the user group. It is assumed that users u1 and u2 exist. As can be seen according to the user attribute information, the user u1 likes music, sports, and literature. The user u2 likes sports and military. When the users enter the portal system, the user u1 has the authority to access channels corresponding to the music group, the sports group, and the literature group and the user u2 has the authority to access channels corresponding to the sports group and the military group, so that different channel contents are displayed for different users.

As can be seen from above, in the first embodiment, as the user attribute information is matched with the rules corresponding to the user group and the user is classified into the user group corresponding to the rule that is matched successfully, the user can be dynamically classified, so as to associate different channels with different users, so that different users see different channels when entering the portal system.

However, when a plurality of users belongs to the same user group, all the users have the authority to access the channels corresponding to the user group and the portal system displays the same content for the users. To enable the plurality of users to view different portlets in the same channel, the disclosure provides a second embodiment.

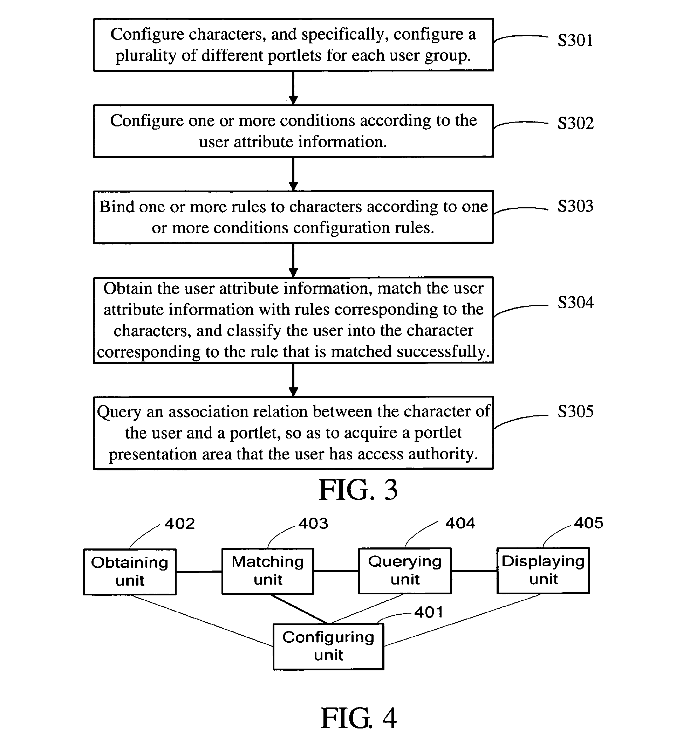

In the second embodiment, the disclosure provides a method for classifying users, the process of which is as shown in FIG. 3, which specifically includes the following steps.

In step S301, characters are configured. Specifically, a plurality of portlets is configured for each character. It should noted that the characters can be characters in one user group, that is to say, a user group can have different characters. Taking the literature group as an example, the literature is classified according to times, which can be categorized into ancient literature and modem literature. Thus, the literature group can have two characters including ancient literature lovers and modem literature lovers. Of course, it can be considered that a relation between the user group and the characters is a category and a subcategory.

In step S302, one or more conditions are configured according to user attribute information. Each condition can be a triplet related to the user attribute information. For example, the triplet is a combination of three kinds of user attribute information including number segment information, age, and hobbies, and an example of which is as follows:
■ "number segment information": between "XX and XX";
■ "age": between "XX and XX" or greater than "XX"; and
■ "hobby": interested in "XX" and "XX".

It should be noted that each condition can be a combination of random kinds of user attribute information.

In step S303, one or more rules are bound to characters according to one or more condition configuration rules. Each rule includes one or more conditions, that is to say, a rule is a set of conditions. Usually, a plurality of conditions for a specific purpose can be classified into a rule.

In step S304, the user attribute information is obtained, the user attribute information is matched with rules corresponding to the characters, and the user is classified into the character corresponding to the rule that is matched successfully.

In step S305, when the user requests to access the portlet, an association relation between the character of the user and a portlet is queried, so as to acquire a portlet presentation area that the user has access authority.

The portlet and the character are usually associated when the portlet is maintained, so that the user can control visibility of the portlet.

The second embodiment is illustrated below. It is assumed that both users u1 and u2 have an authority to access a certain music channel. The user u1 likes paying attention to content in popular music and the user u2 likes paying attention to content of classical music. As can be seen according to the user attribute information, in this embodiment, the user u1 and the user u2 can be classified as two different characters. A portlet presentation area that the user u1 has access authority can be acquired according to the association relation between the character of the user u1 and the portlet. Similarly, a portlet presentation area that the user u2 has access authority can be acquired according to the association relation between the character of the user u2 and the portlet. Thus, the plurality of users can see different portlets in the same channel, so as to realize personalized display.

As can be seen from the foregoing, in the second embodiment, as the attribute information of the user is first matched with the rule corresponding to the character and the user is classified into the character corresponding to the rule that is matched successfully, the user can be dynamically classified, so as to associate different portlets for different users and enable the different users to see different portlets after entering the portal system.

The method in FIG. 1 can be implemented through various types of devices. One device for classifying users is as shown in FIG. 4, which includes an obtaining unit 402, and a matching unit 403. The obtaining unit 402 is configured to obtain user attribute information of a user. The matching unit 403 is configured to match the user attribute information with pre-determined user groups and/or pre-determined characters and classify the user into a user group and/or character that is matched successfully.

The pre-determined user groups and/or pre-determined characters can correspond to at least one rule. When the matching unit 403 matches the user attribute information with the pre-determined user groups and/or pre-determined characters, the matching unit 403 can match the user attribute information with a rule corresponding to the pre-determined user groups and/or a rule corresponding to the pre-determined characters. The user group and/or character that is matched successfully is a user group and/or character corresponding to the rule that is successfully matched with the user attribute information.

The device in FIG 4 can further include a first configuring unit which is configured to configure conditions according to the user attribute information before the obtaining unit 402 obtains the user attribute information. Each condition includes one or more kinds of user attribute information. The rule is configured according to the conditions. Each rule includes one or more conditions. The one or more rules are bound to a user group and/or character.

The device in FIG. 4 can further include a second configuring unit and a displaying unit 405. The second configuring unit is configured to configure at least one channel for each user group after the obtaining unit 402 obtains the user attribute information. The displaying unit 405 is configured to display content of a channel corresponding to a user group that is matched successfully for the user when the user enters a portal system after the matching unit 403 classifies the user into a user group that is matched successfully. Alternatively, the second configuring unit is configured to configure at least one portlet for each character before the obtaining unit 402 obtains the user attribute information. The displaying unit 405 is configured to display portlet corresponding to the character that is matched successfully for the user when the user enters the portal system after the matching unit 403 classifies the user into a character that is matched successfully.

Of course, the first configuring unit and the second configuring unit can be the same unit, that is, the configuring unit 401 as shown in FIG 4.

The device in FIG. 4 can further include a querying unit 404. The querying unit 404 is configured to query an association relation between the user group of the user and the channel configured by the configuring unit 401 after the user enters the portal system. Alternatively, the association relation between the character of the user and the portlet configured by the configuring unit 401 is queried.

The displaying unit 405 can display different channel contents for different users according to a query result returned by the querying unit 404. Alternatively, the displaying unit 405 can display different portlets for different users according to a query result returned by querying unit 404.

In the embodiment of the disclosure, as the device for classifying users can first match the user attribute information with the rule corresponding to the user groups or characters and then classify the user into the user group or character corresponding to the rule that is matched successfully, the user can be dynamically classified, so as to associate different channels or portlets for different users and enable different users to see different channels or portlets after entering the portal system.

A method and a system for collecting and analyzing behaviors according to the embodiments of the disclosure are illustrated below.

The disclosure provides a method for collecting and analyzing behaviors, which includes the following steps. Action information of a portal system user for content presented by a portal system is recorded. According to a preset behavior analyzing policy, the action information of the user within a preset statistics period is analyzed, so as to obtain the feature of the user.

After the action information of the portal system user for the content presented by the portal system is recorded and before the action information of the user within a preset statistics period is analyzed, the method can further include storing the recorded action information. Thus, the analysis of the action information of the user within the preset statistics period is practically analysis of the stored action information of the user within a preset statistics period.

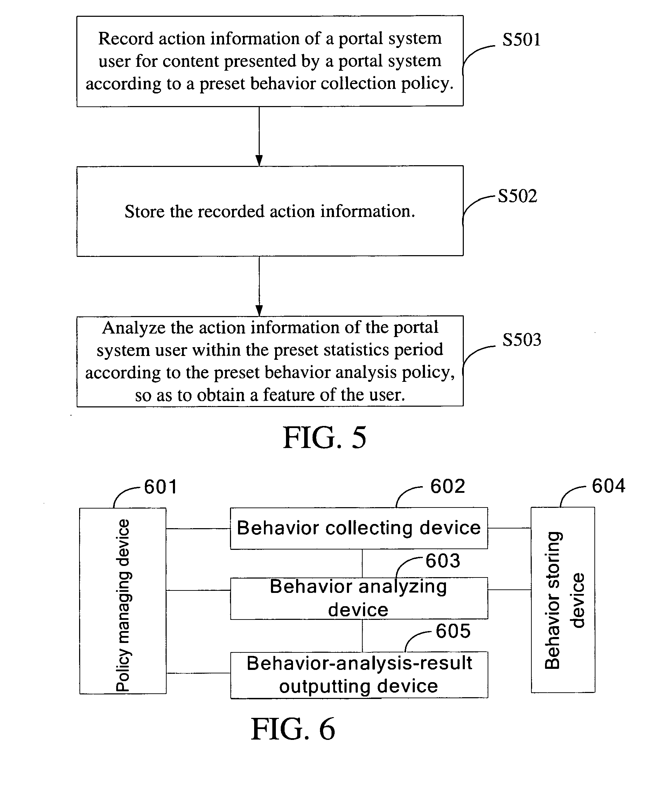

FIG. 5 is a flow chart of a method for collecting and analyzing behaviors according to an embodiment of the disclosure. As shown in FIG 5, the method mainly includes the following steps.

In step S501, according to a preset behavior collecting policy, action information of a portal system user (referred to as "user" hereinafter) for content presented by a portal system is recorded.

The behavior collecting policy is configured to instruct a scope and a mode of behavior collecting, which includes the following policies.

### A. A behavior collecting scope policy:

### a1. Content and content keywords:

A unique identification (ID), that is, a content ID, is assigned to each piece of content presented by the portal system. The content can be a thread, a piece of video, a ring back tone, a game, and the like.

Each piece of content presented by the portal system can include a content keyword provided by a content provider (CP) or an individual. When the CP or individual does not provide the content keywords, a content title is used as the content keyword.

### a2. Actions on the content:

The actions on the content presented by the portal system can include, but is not limited to, the following types:
Browsing: a user views (hears) detailed information in the content in a mode such as clicking;
Favorites adding: A user adds information in the content or a uniform resource locator (URL) of the content in a favorites list on the portal system, so as to locate the favorite content rapidly during access next time;
Recommendation: A user recommends the content to a third party (the third party chooses to consume and the third party is charged);
Gift sending: A user sends the content to the third party as a gift (a receiver chooses to consume and the gift sender is charged);
Order: A subscription relation for consumption of the content by the user is realized in a certain mode, for example, a business operation support system (BOSS) is invoked to realize establishment of the subscription relation for the consumption of content by the user;
Playback: A streaming media capability is invoked to realize on-demand/direct playback actions;
Download: Capability of a download server is invoked to realize download through the Hypertext Transfer Protocol (HTTP), the Open Mobile Alliance (OMA) or the Mobile Information Device Profile(MIDP) and the content can be downloaded on a local equipment (for example, a personal computer, handheld equipment or other terminals);
Purchase: A certain charge is paid in a mode such as call charge collecting and bank card payment to possess the right to consume the content;
Ring back tone: The content is set as a ring back tone and a third party can hear the ring back tone when calling; and
   Others.

### B. Behavior collecting mode policy:

### b1. Recorded action information:

The recorded action information of the user for the content presented by the portal system includes a user ID, a content ID, an action type (as discussed in a2), action time, and an action information collecting channel.

The action information collecting channel can include, but not limited to, the following types:
a World Wide Web (WEB) channel: A user accesses the portal system in a WEB mode;
a Wireless Application Protocol (WAP) channel: A user accesses the portal system in a WAP mode;
an interactive voice response (IVR) channel: A user accesses the portal system in a voice mode;
an unstructured supplementary service data (USSD) channel: A user accesses the portal system in a USSD key mode;
a short message service (SMS) channel: A user accesses the portal system in an SMS mode;
a WEB client channel: A user accesses the portal system in a mode of a WEB client;
a WAP client channel: A user accesses the portal system in a mode of a WAP client; and
   Others.

### b2. Recording mode:

The action information described in b1 (actions of a user is very frequent, so that the amount of the action information is huge) is recorded in a log mode by monitoring each action information collecting channel (that is, an access channel of a user), the action information of the user is recorded in a memory at a server end, and subsequently the action information is persisted to a behavior storing device periodically through a background process queue. A type of the action information collecting channel can be content in b1, the description of which is omitted here.

In step S502, the recorded action information is stored. As the portal system presents content at a massive level and the number of users of the access portal system is also at a massive level, the recorded action information is at a massive level. At this time, the following storage schemes can be adopted.

Table (file) storage: table (file) storage is performed according to a number segment of a user ID and collected action information of different users is stored in different tables (files). In practical implementation, the following two solutions can be adopted:
S1. Manual control table storage: A user writes table logic codes by oneself to realize table storage of the recorded action information. As an example of an algorithm, if tables are established according to number segments of mobile phones and users can be classified into 10 number segments, 10 tables are established and modulus 10 is adopted for mobile phone numbers (a mobile phone number is divided by 10 to acquire a residue). User data having a modulus 0 is put in a user action score table 0 (as shown in Table 2). User data with a modulus 1 is put in a user action score table 1, and so on.
S2. Database automatic control table storage: a table storing function based on Oracle and DB2. A table storing policy is designated during table establishment, and separate storage is designated during table establishment, taking the Oracle algorithm as an example:
   PARTITION BY RANGE (msisdn)
   (PARTITION BASETAB_PART1 VALUES LESS THAN ('86134'),
   PARTITION BASETAB_PART2 VALUES LESS THAN ('86135'),
   PARTITION BASETAB_PART3 VALUES LESS THAN ('86136'),
   PARTITION BASETAB_PART4 VALUES LESS THAN ('86137'),
   PARTITION BASETAB_PART5 VALUES LESS THAN ('86138'),
   PARTITION BASETAB_PART6 VALUES LESS THAN ('86139'),
   PARTITION BASETAB_PART7 VALUES LESS THAN ('86159'),
   PARTITION BASETAB_PART8 VALUES LESS THAN ('86160'),
   PARTITION BASETAB_PART9 VALUES LESS THAN (MAXVALUE))

Periodical backup/overdue data elimination: Action information that behavior analysis is finished and eliminated from the storing device is backed up periodically or the action information that behavior analysis is finished is cleared periodically from the storing device, so as to ensure sufficient storage space in the storing device to accommodate new action information and keep relatively high information write/read performance.

In step S503, according to the preset behavior analyzing policy, the action information of the user within the preset statistics period is analyzed, so as to obtain a feature of the user.

The behavior analyzing policy is configured to instruct analysis references and schemes for the behavior analysis, which can include the following:
c1. An action score standard, in which score values are defined for actions of the user for the content presented by the portal system and in the following the content is processed according to the action score standard.

First, a series of features is preset, that is, preset features.

A contribution measurement standard for measuring contribution of the user action to the preset feature is defined. In practical implementation, the contribution measurement standard can serve as an action score standard. For example, it can be defined that a score 5 is obtained for browsing once, a score 20 is obtained for download once, and a score 10 is obtained for adding a favorite once. A relation between each action type and a corresponding score defined in the action score standard can be as shown in Table 1:

**Table 1**

| | | |
|---|---|---|
| User Action Configuration | | |

| Field Name | Type | Notes |
|---|---|---|
| *ActionID | Int | An action ID |
| *ActionName | Varchar(15) | An action name |
| *ActionScore | Int | A score for each action |
| *iSAvailable | Boolean | True-effective; false-ineffective, no score, true as a default value |

### c2. A relation between a preset feature and contribution information:

Contribution information that has contribution to the preset feature is defined. That is to say, each preset feature includes a set (one or more pieces) of contribution information that has a contribution effect on the preset feature. In practical implementation, the contribution information can serve as a keyword, and the keyword set forms a keyword base. The keyword base represents a corresponding relation between a preset feature and each keyword. For example, the preset feature is "the user likes music". The preset feature includes contribution information that has a contribution effect for "the user likes music" such as "music", "Mariah Carey", and "Shang Wenjie ". In combination with the action score standard described in c1, when it is judged that a keyword in the content of the user action matches a subordinate keyword of a certain preset feature, the action triggers a score of the preset feature by the keyword. Referring to the two examples in the foregoing, when the user performs a browsing action on the content "Mariah Carey's New Album" (a keyword in the content is "Mariah Carey"), the browsing action triggers a score 5 of the keyword "Mariah Carey"(matched with the content keyword) for the preset feature "music".

### c3. A preset feature and threshold value:

On the basis of the behavior analyzing policy defined in c1 and c2, a threshold value for determining whether a preset feature is a feature of a user is defined. First, a score value contributed to the preset feature by the keyword (a keyword in the content is matched with a certain keyword in the keyword base and the matching can be the same or similar to a certain degree) in the content triggered by each action within a preset statistics period is obtained. Next, the score values triggered by each action in the statistics period are added, so as to obtain a final score value. When the final score value reaches the threshold value, it is determined that the user has the preset feature. An example is provided below for illustration.

Referring to the three examples, a keyword set that has a contribution effect and exists in a keyword base of the preset feature "the user likes music" includes "music", "Mariah Carey", "Shang Wenjie" (it is preset that "Mariah Carey" and "Shang Wenjie" belong to "music", the related actions on "Mariah Carey" and "Shang Wenjie" also accumulates the related action on "music"). A score threshold value of "the user likes music" is 500 points and a statistics period is between 0 o'clock on January 20, 2008 and 0 o'clock on January 21, 2008. A score 5 is assigned for browsing once, a score 20 for download once, and a score 10 for adding a favorite once. In the statistics period, a user with a user ID 001 browses "music" once, browses "Mariah Carey" once, adds a favorite once, performs download once, and browses "Shang Wenjie" twice. Therefore, within the statistics period, the user obtains a final score value 95 points. According to the behavior analyzing policy, the final score value 95 does not reach the threshold value 500 points corresponding to the preset feature "the user likes music", so that it is judged that the user does not have the preset feature. When the user performs actions, score actions can be performed according to the action score standard in Table 1 and the statistics of scores within the statistics period can be referred to in Table 2.

**Table 2**

| User Action Score | | |
|---|---|---|
| Field name | Type | Note |
| *UserID | Vchar(15) | A mobile phone number of a keyword user |
| *ContentID | Vchar(15) | Content ID |
| *ActionSatisticDate | String | A month of the action information that is taken statistics of, for example, a "YYYYMM" format (the counting information uses month as a unit) |
| *ActionCount01 | Int | Order times |
| *ActionCount02 | Int | Playback times |
| *ActionCount03 | Int | Ordinary download times |
| *ActionCount04 | Int | Ring back tone download times |
| *ActionCount05 | Int | Ring back tone setting times |
| *ActionCount06 | Int | Gift sending times |
| *ActionCount07 | Int | Recommendation times |
| *ActionCount08 | Int | Favorites adding times |
| *ActionCount09 | Int | Browsing times |
| *ActionCount10 | Int | To be determined |

In addition, the behavior analyzing policy can further include the following.

### c4. New/incremental analysis:

It is defined whether each behavior analysis is incremental analysis or new analysis.
In the foregoing examples, it represents whether to add the final score value obtained from the current behavior analysis to the final score value obtained from the previous behavior analysis, so as to compare a sum value of the two final score values with the threshold value to determine a feature of the user.

### c5. Statistics period:

A starting time and an ending time of each statistics period are defined according to a duration policy or other policies.

It should be noted that a plurality of features of a certain user can be determined through the method for analyzing behaviors at the same time or a plurality of features of a plurality of users can be determine through the method for analyzing behaviors at the same time.

In addition, in practical application, after step S501 is performed, step S503 can be performed. For example, when the statistics period is relatively short, step S503 can be performed after step S501 is performed.

The system for collecting and analyzing behaviors according to the embodiments of the disclosure is illustrated below with reference to FIG. 6.

As shown in FIG. 6, in the embodiment, the disclosure provides a system for collecting and analyzing behaviors, which includes a behavior collecting device 602 and a behavior analyzing device 603. The behavior collecting device 602 is configured to record action information of a portal system user for content presented by a portal system. The behavior analyzing device 603 is configured to analyze the action information of the user within a preset statistics period according to a preset behavior analyzing policy, so as to obtain a feature of the user.

The system for collecting and analyzing behaviors may further include a behavior storing device 604, which is configured to store the recorded action information after the behavior collecting device 602 records the action information of the portal system user for the content presented by the portal system and before the behavior analyzing device 603 analyzes the action information of the user within the preset statistics period.

The action information analyzed by the behavior analyzing device 603 is the action information stored in the behavior storing device 604.

When the behavior analyzing device 603 analyzes the action information of the user within the preset statistics period according to the preset behavior analyzing policy, the behavior analyzing device 603 collects statistics of a final contribution value of the contribution information to the preset feature triggered by the actions corresponding to the action information according to a preset corresponding relation between content presented by the portal system and the contribution information that has an contribution effect on the preset feature, and a preset contribution measurement standard configured to measure contribution of the actions to the preset feature. The preset feature is a preset feature of the user. Also, the behavior analyzing device 603 determines whether the preset feature is the feature of the portal system user according to the final contribution value.

The system for collecting and analyzing behaviors may further include a policy managing device 601 and a behavior-analysis-result outputting device 605. Connection relations and functions of various devices in the system in FIG. 6 are as follows.

The policy managing device 601 is connected to the behavior collecting device 602, the behavior analyzing device 603, and the behavior-analysis-result outputting device 605, respectively. The behavior collecting device 602 and the behavior analyzing device 603 are connected to the behavior storing device 604 respectively. The behavior analyzing device 603 is connected to the behavior-analysis-result outputting device 605.

The behavior collecting device 602 is connected to the behavior analyzing device 603.

The policy managing device 601 is configured to configure a behavior collecting policy on the behavior collecting device 602, a behavior analyzing policy on the behavior analyzing device 603, and a behavior-analysis-result outputting policy on the behavior-analysis-result outputting device 605, which are specifically as follows.
(I) The behavior collecting policy is configured to instruct a scope and a mode of behavior collection, which can include the content in the foregoing A and B.
(II) The behavior analyzing policy is configured to instruct an analysis reference and a scheme of behavior analysis, which can include the content in the foregoing c1, c2, and c3, and can further include the content in the foregoing c4 and c5.
(III) The behavior-analysis-result outputting policy includes:
   an output mode, such as a report form, a curve diagram, a proportion chart or a parallel table;
   output content, in which user details are output according user groups corresponding to keywords;
   the behavior collecting device 602 is configured to record the action information of the user for the content presented by the portal system according to the behavior collecting policy configured by the policy managing device 601;
   the behavior storing device 604 is configured to store the action information collected by the behavior collecting device 602;
   the behavior analyzing device 603 is configured to analyze the action information of the user within the preset statistics period according to the behavior analyzing policy configured by the policy managing device 601, so as to obtain a feature of the user; and
   the behavior-analysis-result outputting device 605 is configured to output the feature of each user according to the behavior-analysis-result outputting policy configured by the policy managing device 602.

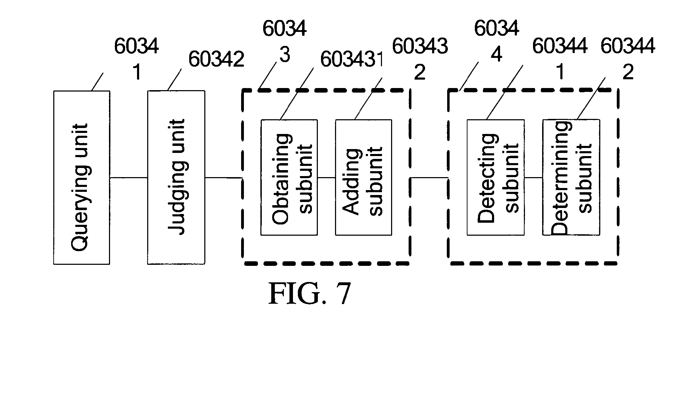

In practical implementation, a structure of the behavior analyzing device 603 can be as shown in FIG. 7. That is, the behavior analyzing device 603 can include a querying unit 6031, a judging unit 6032, a statistics unit 6033, and a determining unit 6034. The statistics unit 6033 includes an obtaining subunit 60331 and an adding subunit 60332. The determining unit 6034 includes a detecting subunit 60341 and a determining subunit 60342. Connection relations and functions of all units are as follows.

The querying unit 6031 and the statistics unit 6033 are connected to the judging unit 6032 respectively. The statistics unit 6033 is connected to the determining unit 6034. The obtaining subunit 60331 is connected to the adding subunit 60332. The detecting subunit 60341 is connected to the determining subunit 60342.

The querying unit 6031 is configured to query a keyword base stores keywords having a contribution effect on the preset feature according to a keyword in the user action content. For example, a keyword set that has a contribution effect on the preset feature "the user likes music" and exists in the keyword base includes "music", "Mariah Carey", and "Shang Wenjie" (it is preset that the "Mariah Carey", "Shang Wenjie", and "music" are scored independently). The user action content includes "music infinite", "Qing Cheng (a single sung by Shang Wenjie)", and "Huangtai Wine-Marketing Industry". The keyword of the "music infinite" is "music", the keyword of the "Qing Cheng" is "Shang Wenjie", and the keyword of the "Huangtai Wine-Marketing Industry" is "wine".

The judging unit 6032 is configured to judge whether the keywords in the content exist in the keyword base. Referring to the foregoing example, for the preset feature "the user likes music", the keywords "music" and "Shang Wenjie" that are matched with the keywords in the content and belong to the preset feature (the keyword "wine" is not a keyword that belongs to the preset feature) exist in the keyword base, so that it is judged that the keywords in the content exist.

The obtaining subunit 60331 is configured to obtain a score value contributed to the preset feature by a keyword triggered by each action within the statistics period when the judging unit 6032 judges that the keywords in the content exist. Referring to the foregoing example, if within the preset statistics period, for the preset feature "the user likes music", keywords "music" and "Shang Wenjie" that belong to the preset feature and are matched with the keywords in the content exist in the keyword base and the user actions include browse of "music infinite" 10 times, browse of "Qing Cheng" once, download once, recommendation once, and gift sending once within the statistics period, according to the action score standard, a score value contributed to the preset feature "the user likes music" triggered by each action is as follows:
browse of "music infinite" once: 1 point;
browse of "Qing Cheng" once: 1 point;
download of "Qing Cheng" once: 10 points;
recommendation of "Qing Cheng" once: 5 points; and
gift sending of "Qing Cheng" once: 20 points;
(the action score standard can be set according to practical situations)

The adding subunit 60332 is configured to add a final score value contributed to the preset feature by keywords triggered by all actions obtained by the obtaining subunit 60331. Referring to the foregoing example, a final score value contributed to the preset feature "the user likes music" by all actions within the statistics period is 46: browse of "music infinite" 10 times (scored 10 points in total), browse of "Qing Cheng" once (scored 1 point in total), download of "Qing Cheng" once (scored 10 points in total), recommendation of "Qing Cheng" once (scored 5 points in total), and gift sending of "Qing Cheng" once (scored 20 points in total).

The detecting subunit 60341 is configured to detect whether the final score value reaches a preset threshold value which is configured to determine whether the preset feature is a feature of the user. Referring to the foregoing example, when the final score value is 46 and the preset threshold value is 40 points, a detection result is that the final score value reaches the threshold value.

The determining subunit 60342 is configured to determine that the user has the foregoing preset feature when the detecting subunit 60341 detects that the final score value reaches the threshold value.

In conclusion, the essence of the method for collecting and analyzing behaviors and the system for collecting and analyzing behaviors is that the user has actions of different content on the portal system, different content contains different keywords, and access weights of different keywords by different user can be accumulated, so as to obtain behavior hobby keywords of the user, so that the portal system can perform customer marketing and care based on behavior of users.

In addition, persons of ordinary skill in the art should understand that all or a part of the steps of the method according to the embodiments may be implemented by a program instructing relevant hardware. The program may be stored in a computer readable storage medium. When the program is run, the process of the method according to the embodiments is performed. The storage medium may be a magnetic disk, an optical disk, a read-only memory (ROM), or a random access memory (RAM).

Only some exemplary embodiments of the disclosure are described. It should be noted by persons of ordinary skill in the art that various improvements and modifications may be further made without departing from the principles of the disclosure, which should be construed as falling within the scope of the disclosure.

## Claims

1. A method for classifying users, comprising:
obtaining user attribute information of a user; and
matching the user attribute information with pre-determined user groups and/or pre-determined characters, and classifying the user in a user group and/or character that is matched successfully.

2. The method according to claim 1, wherein
the pre-determined user groups and/or pre-determined characters correspond to at least one rule;
the matching the user attribute information with the pre-determined user groups and/or pre-determined characters comprises: matching the user attribute information with a rule corresponding to the pre-determined user groups and/or a rule corresponding to the pre-determined characters; and
a user group and/or character that is matched successfully is a user group and/or character corresponding to the rule that is matched successfully with the user attribute information.

3. The method according to claim 2, wherein before the obtaining the user attribute information, the method further comprises:
configuring conditions according to the user attribute information, wherein each condition comprises one or more pieces of user attribute information;
configuring rules according to the conditions, wherein each rule comprises one or more conditions; and
binding one or more rules with one user group and/or character.

4. The method according to claim 1, 2 or 3, wherein
before the obtaining the user attribute information, the method further comprises:
configuring at least one channel for each user group; and
after the classifying the user into the user group that is matched successfully, the method further comprises: after the user enters a portal system, displaying content of the channel corresponding to the user group that is matched successfully for the user;
and/or,
before the obtaining the user attribute information, the method further comprises:
configuring at least one portlet for each character; and
after the classifying the user into the character that is matched successfully, the method further comprises: after the user enters a portal system, displaying a portlet corresponding to the character that is matched successfully for the user.

5. A device for classifying users, comprising:
an obtaining unit, configured to obtain user attribute information of a user; and
a matching unit, configured to match the user attribute information with pre-determined user groups and/or pre-determined characters, and classify the user into a user group and/or character that is matched successfully.

6. The device according to claim 5, wherein the pre-determined user groups and/or pre-determined characters correspond to at least one rule,
when the matching unit matches the user attribute information with the pre-determined user groups and/or pre-determined characters, the matching unit matches the user attribute information with a rule corresponding to the pre-determined user groups and/or a rule corresponding to the pre-determined characters, and
a user group and/or character that is matched successfully is a user group and/or character corresponding to the rule that is matched successfully with the user attribute information.

7. The device according to claim 6, further comprising:
a first configuring unit, configured to configure conditions according to the user attribute information before the obtaining unit obtains the user attribute information, configure rules according to the conditions, and bind one or more rules to one user group and/or character, wherein each condition comprises one or more pieces of user attribute information, and each rule comprises one or more conditions.

8. The device according to claim 5, 6 or 7, further comprising:
a second configuring unit, configured to configure at least one channel for each user group before the obtaining unit obtains the user attribute information; and
a displaying unit, configured to display content of a channel corresponding to the user group that is matched successfully for the user when the user enters a portal system after the matching unit classifies the user into the user group that is matched successfully;
and/or,
the second configuring unit, configured to configure at least one portlet for each character before the obtaining unit obtains the user attribute information; and
the displaying unit, configured to display a portlet corresponding to the character that is matched successfully for the user when the user enters the portal system after the matching unit classifies the user into the character that is matched successfully.

9. A method for collecting and analyzing behaviors, comprising:
recording action information of a portal system user for content presented by a portal system; and
analyzing the action information of the user within a preset statistics period according to a preset behavior analyzing policy, so as to obtain a feature of the user.

10. The method according to claim 9, wherein after the recording the action information of the portal system user for the content presented by the portal system, before the analyzing the action information of the user within the preset statistics period, the method further comprises: storing the recorded action information, and wherein
the analyzing the action information of the user within the preset statistics period according to the preset behavior analyzing policy comprises: analyzing the stored action information of the user within the preset statistics period according to the preset behavior analyzing policy.

11. The method according to claim 9 or 10, wherein the analyzing the action information of the user within the preset statistics period according to the preset behavior analyzing policy comprises:
collecting statistics of a final contribution value of contribution information to a preset feature triggered by an action corresponding to the action information according to a preset corresponding relation between the content presented by the portal system and contribution information having a contribution effect on the preset feature, and a preset contribution measurement standard configured to measure contribution of the action to the preset feature, wherein the preset feature is a preset feature of the user; and
determining whether the preset feature is a feature of the portal system user according to the final contribution value.

12. The method for collecting and analyzing behaviors according to claim 11, wherein the contribution information is a keyword that has a contribution effect on the preset feature, and
the collecting statistics of the final contribution value of the contribution information to the preset feature triggered by the action corresponding to the action information according to the preset corresponding relation between the content presented by the portal system and the contribution information having the contribution effect on the preset feature and the preset contribution measurement standard configured to measure the contribution of the action to the preset feature comprises:
querying a keyword base storing keywords having a contribution effect on the preset feature according to a keyword in the content presented by the portal system; and
judging whether the keyword in the content presented by the portal system exists in the keyword base, and
if the keyword in the content presented by the portal system exists in the keyword base, collecting statistics of a final contribution value to the preset feature of the keyword in the content presented by the portal system triggered by the action according to the keyword in the content presented by the portal system and the contribution measurement standard.

13. The method according to claim 12, wherein
the contribution measurement standard is an action score standard that defines a score value for an action in the content presented by the portal system for the portal system user, the collecting statistics of the final contribution value to the preset feature of the keyword in the content presented by the portal system triggered by the action according to the keyword in the content presented by the portal system and the contribution measurement standard comprises:
obtaining a score value contributed to the preset feature by the keyword in the content presented by the portal system triggered by each action according to the keyword in the content presented by the portal system and the action score standard; and
adding the score values triggered by all actions to obtain a final score value;
and the determining whether the preset feature is the feature of the portal system user according to the final contribution value comprises:
detecting whether the final score value reaches a preset threshold value that is configured to determine whether the preset feature is the feature of the portal system user, and if the final score value reaches the preset threshold value, the preset feature is the feature of the portal system user.

14. The method according to claim 13, wherein the action score standard assigns a score value for each action respectively.

15. The method according to claim 11, wherein the preset feature is determined by collecting statistics of the final contribution value on at least two pieces of contribution information.

16. The method according to claim 11, wherein the action comprises consumptive and/or non-consumptive actions of the user, the consumptive action comprises a combination of one or more of recommendation, gift sending, order, on-demand playback, purchase, ring back tone, and download, and the non-consumptive action comprises a combination of one or more of browsing, favorites adding, and pre-playback.

17. A system for collecting and analyzing behaviors, comprising:
a behavior collecting device, configured to record action information of a portal system user for content presented by a portal system; and
a behavior analyzing device, configured to analyze the action information of the user within a preset statistics period according to a preset behavior analyzing policy, so as to obtain a feature of a user.

18. The system according to claim 17, further comprising: a behavior storing device, configured to store the recorded action information after the behavior collecting device records the action information of the portal system user for the content presented by the portal system and before the behavior analyzing device analyzes the action information of the user within the preset statistics period; wherein
the action information analyzed by the behavior analyzing device is the action information stored by the behavior storing device.

19. The system according to claim 17 or 18, wherein when the behavior analyzing device analyzes the action information of the user within the preset statistics period according to the preset behavior analyzing policy, the behavior analyzing device collects statistics of a final contribution value of the contribution information to the preset feature triggered by an action corresponding to the action information according to a preset corresponding relation between the content presented by the portal system and the contribution information having a contribution effect on the preset feature and a preset contribution measurement standard configured to measure contribution of the action to the preset feature, the preset feature is a feature of the preset user, and the behavior analyzing device determines whether the preset feature is a feature of the portal system user according to the final contribution value.

20. The system according to claim 19, wherein the contribution information is a keyword having a contribution effect on the preset feature, and the behavior analyzing device comprises:
a querying unit, configured to query a keyword base storing keywords having a contribution effect on the preset feature according to a keyword in the content presented by the portal system;
a judging unit, configured to judge whether the keyword in the content presented by the portal system exists in the keyword base;
a statistics unit, configured to collect statistics of a final contribution value to the preset feature of the keyword in the content presented by the portal system triggered by the action according to the keyword in the content presented by the portal system and the contribution measurement standard when it is determined that the keyword in the content presented by the portal system exists in the keyword base; and
a determining unit, configured to determine whether the preset feature is a feature of the portal system user according to the final contribution value.

21. The system according to claim 20, wherein
the contribution measurement standard is an action score standard that defines a score value for an action of the portal system user in the content presented by the portal system, and the statistics unit comprises:
an obtaining subunit, configured to obtain a score value contributed to the preset feature by the keyword in the content presented by the portal system triggered by the each action according to the keyword in the content presented by the portal system and the action score standard when it is determined that the keyword in the content presented by the portal system exists in the keyword base; and
an adding subunit, configured to add score values triggered by all actions to obtain a final score value;
and the determining unit comprises:
a detecting subunit, configured to detect whether the final score value reaches a preset threshold value configured to determine whether the preset feature is a feature of the portal system user; and
a determining subunit, configured to obtain that the preset feature is the feature of the portal system user when it is detected that the final score value reaches the threshold value.

22. The system according to claim 21, wherein the action score standard assigns a score value for each action respectively.

23. The system according to claim 17, wherein the action comprises consumptive and/or non-consumptive action of the user, the consumptive action comprises a combination of one or more of recommendation, gift sending, order, on-demand playback, purchase, ring back tone, and download, and the non-consumptive action comprises a combination of one or more of browsing, favorites adding, and pre-playback.
